# EUROPÄISCHE PATENTSCHRIFT

(11) **EP 3 537 057 B1**
(45) Veröffentlichungstag und Bekanntmachung des Hinweises auf die Patenterteilung: **18.08.2021**
(21) Anmeldenummer: 19160967.6
(22) Anmeldetag: 06.03.2019
(51) Int. Cl.: F24H 1/18

(54) **ELEKTRISCHE HEIZVORRICHTUNG**
ELECTRIC HEATING DEVICE
DISPOSITIF DE CHAUFFAGE ÉLECTRIQUE

(30) Priorität: 07.03.2018 DE 102018105222
(43) Veröffentlichungstag der Anmeldung: 11.09.2019
(73) Patentinhaber: Eichenauer Heizelemente GmbH & Co. KG, 76870 Kandel (DE)
(72) Erfinder: Starck, Roland, 76756 Bellheim (DE); Kexel, Oleg, 76275 Ettlingen (DE)
(74) Vertreter: Twelmeier Mommer & Partner

(56) Entgegenhaltungen:
- WO-A1-2016/025706
- DE-A1- 3 022 034
- DE-A1-102010 062 982
- DE-A1-102014 212 544
- DE-C1- 3 942 266
- US-A1- 2002 040 899

## Beschreibung

Eine elektrische Heizvorrichtung mit den im Oberbegriff des Anspruchs 1 angegebenen Merkmalen ist aus der US 2002/040899 A1 bekannt. Eine ähnliche Heizvorrichtung ist aus DE 10 2014 212 544 A1 bekannt.

Elektrische Heizvorrichtungen, beispielsweise insbesondere Tankheizungen zum Erwärmen von Flüssigkeiten in Kraftfahrzeugen haben in der Regel ein Metallgehäuse, in dem ein PTC-Heizer mit einem PTC-Heizwiderstand und einem Kontaktelement angeordnet ist. Für das Metallgehäuse werden üblicher Weise Strangpressprofile, wie etwa bei der aus DE 11 2006 001 103 B4 bekannten Tankheizung, oder Gussteile, wie etwa bei der aus DE 10 2014 212 544 A1 bekannten Tankheizung, verwendet.

Strangpressprofile ermöglichen mit einfachen Mittel eine sehr gute Wärmeankopplung des PTC-Heizwiderstands an das Metallgehäuse, indem das Strangpressprofil nach dem Einbringen des PTC-Heizers verpresst wird. Allerdings sind die möglichen Formen des Metallgehäuses begrenzt, weshalb zunehmend Gussteile für Metallgehäuse von Tankheizungen verwendet werden. Gussteile ermöglichen auch den Einsatz von kostengünstigeren Legierungen, erschweren aber eine gute thermische Ankopplung des PTC-Heizers an das Metallgehäuse, insbesondere da sich mit kostengünstigen Legierungen keine Kanäle oder Taschen herstellen lassen, die PTC-Heizer aufnehmen und dann verpresst werden können.

Bei der aus der DE 10 2014 212 544 A1 bekannten Tankheizung wird deshalb ein Stahlfederblech verwendet, das an Halterippen des Gehäuseteiles festgelegt ist, wobei die Halterippen nach dem Festlegen gestaucht werden, um den PTC-Heizer mit ausreichendem Druck gegen eine Wärmeübertragungsfläche eines Gehäuseteils zu drücken und so einen ausreichenden Wärmekontakt zwischen PTC-Heizer und Metallgehäuse herzustellen.

Aufgabe der vorliegenden Erfindung ist es, einen Weg aufzuzeigen, wie bei einer Behälterheizung die Wärmeankopplung des PTC-Heizers an das Gehäuse verbessert werden kann und erzeugte Wärme mit möglichst geringem Aufwand effizient an eine Flüssigkeit in dem Behälter abgegeben werden kann.

Diese Aufgabe wird durch eine elektrische Heizvorrichtung mit den im Anspruch 1 angegebenen Merkmalen gelöst. Vorteilhafte Weiterbildungen der Erfindung sind Gegenstand von Unteransprüchen.

Zur Verbesserung der Wärmeankopplung wird an dem Gehäuseteil ein Federelement befestigt, das eine Federkraft erzeugt, die den PTC-Heizer gegen eine Wärmeübertragungsfläche des Gehäuseteils drückt. Das Federelement ist bevorzugt aus einer Legierung auf Basis von Aluminium, beispielsweise einer federharten Legierung wie AlMgSi. Aluminiumlegierungen haben einen guten Wärmeleitwert, so dass von dem PTC-Heizer erzeugte Wärme dann vorteilhaft auch über das Federelement abgeführt werden kann. Das Federelement kann beispielsweise als Blechteil oder als Strangpressteil hergestellt sein.

Erfindungsgemäß ist das Federelement mit dem Gehäuseteil verstemmt. Das Federelement wird durch Verstemmen an dem Gehäuseteil befestigt wird, nämlich mittels Nieten. Vorteilhaft lässt sich so eine einfache Fertigung realisieren. Zudem besteht bei dem Verrasten oder Verstemmen des Federelements mit dem Gehäuseteil weniger die Gefahr, dass sich Metallspäne bilden, die elektrische Probleme verursachen können, als bei dem herkömmlichen Einschieben eines Federblechs in eine Nut.

Zusätzlich kann vorgesehen sein, dass Federelement und Gehäuseteil noch verpresst sind. Dadurch kann der Anpressdruck noch weiter erhöht und so die Wärmeübertragung weiter verbessert werden.

Erfindungsgemäß ist vorgesehen, dass das Federelement mittels Niete mit dem Gehäuseteil verstemmt ist. Die Befestigungsvorrichtungen wie Niete können einstückig mit dem Gehäuseteil ausgebildet sein, was eine einfache Fertigung ermöglicht. Ein Gehäuseteil mit integrierten Stiften oder Vorsprüngen, die als Niete verwendet werden können, kann beispielsweise durch Fließpressen hergestellt werden. Derartige Niete können durch Öffnungen des Federelements gesteckt und dann verstemmt werden, so dass dann das Federelement mit dem Gehäuseteil vernietet ist. Bevorzugt ist das Federelement unter Spannung vernietet.

Das Gehäuseteil einer erfindungsgemäßen Behälterheizung kann beispielsweise als eine Platte ausgebildet sein, die den PTC-Heizer trägt. Eine solche Platte kann kostengünstig durch Fließpressen hergestellt und dabei mit stiftförmigen Vorsprüngen versehen werden, die dann als Niete zum Befestigen des Federelements oder anderer Komponenten verwendet werden können. Fließpressen ermöglicht es auch an dem Gehäuseteil Laschen, Wärmeabgabeelemente oder ähnliches auszubilden. Möglich ist aber auch, das Gehäuseteil als Blechteil oder Druckgussteil herzustellen. Insbesondere bei einem Druckgussteil kann dafür die Auflagefläche für den PTC-Heizer vorher eben gepresst sein. Befestigungsansätze wie Nietbolzen können auch nachträglich an dem Gehäuseteil angebracht sein. Unabhängig von der Form und Herstellung des Gehäuseteils kann an ihm ein zusätzliches Wärmeabgabeelement befestigt sein, beispielsweise durch einstückig mit dem Gehäuseteil ausgebildeten Nieten oder durch Verlöten. Vorteilhaft kann sowohl das Gehäuseteil als auch das Wärmeabgabeelement fast jede beliebige Form aufweisen. Dadurch ist die Behälterheizung flexibel an Geometrie und Kundenwunsch anpassbar. Denkbar sind hierbei auch Varianten, bei denen das Gehäuseteil eine aufstehende Wand als Schwappwand ausgebildet hat oder eine rundum aufstehende Wand aufweist, sodass ein Teilvolumen im Behälter abgegrenzt werden kann..

Die elektrische Heizvorrichtung ist bevorzugt eine Heizung zum Beheizen von Flüssigkeiten, beispielsweise Behälterheizung. Eine Behälterheizung kann z. B. als Durchlauferhitzer zum Beheizen einer Leitung, vorgesehen sein, oder z.B. als Tankheizung oder Batteriebehälterheizung ausgebildet sein. Die erfindungsgemäße Heizvorrichtung kann einen einzigen PTC-Heizer oder mehrere PTC-Heizer enthalten.

Eine weitere vorteilhafte Weiterbildung der Erfindung sieht vor, dass das Gehäuseteil eine Ringwand trägt, die den PTC-Heizer umgibt. Eine solche Ringwand kann vorteilhaft dazu verwendet werden, um die Behälterheizung an einem Tank zu befestigen. Beispielsweise kann die Behälterheizung in eine Öffnung einer Tankwand eingesetzt und dann die Ringwand mit der Tankwand verschweißt werden. Insbesondere wenn die Behälterheizung für einen Wassertank gedacht ist, kann die Ringwand aus Kunststoff hergestellt werden, etwa aus Polyethylen oder einem mit Polyethylen verschweißbaren Kunststoff, so dass die Ringwand mit einer Behälterwand aus Polyethylen oder einem ähnlichen Kunststoff verschweißt werden kann.

Die Ringwand kann vorteilhaft durch Verstemmen an dem metallischen Gehäuseteil befestigt werden, beispielsweise indem als Nieten ausgebildete Vorsprünge des Gehäuseteils durch entsprechende Öffnungen der Ringwand hindurchgreifen. Besonders vorteilhaft ist es dafür, wenn die Ringwand einen an der Trägerplatte anliegenden Flanschabschnitt aufweist, der entsprechend Öffnungen für das Vernieten aufweist. Beispielsweise kann unter Verstemmen auch das Andrücken einer Lasche des Gehäuseteils an das Federelement verstanden werden.

Je nach Gehäuseteilausführung kann die Ringwand alternativ beispielsweise auch durch Verschrauben, Verclipsen, oder Verbiegen der Vorsprünge am Gehäuseteil befestigt werden.

Der Flanschabschnitt kann eine Abdeckung tragen, die einen den PTC-Heizer enthaltenden Innenraum verschließt. Bevorzugt greifen dabei die Befestigungsansätze am Gehäuseteil auch durch entsprechende Öffnungen der Abdeckung hindurch. Denkbar ist es aber ebenso, dass zusätzliche eigene Befestigungsansätze an der Ringscheibe durch Öffnungen an der Abdeckung greifen und oberhalb der Ringscheibe festgelegt, insbesondere heißverstemmt sind. Vorteilhaft kann die Abdeckung einen Steckverbinder zum Anschließen des PTC-Heizers und/oder weiterer elektrischer Komponenten wie z.B. Sensoren tragen. Besonders vorteilhaft ist es, wenn die Abdeckung einstückig mit einem Steckverbindergehäuse ausgebildet ist. Die Abdeckung ist bevorzugt aus Kunststoff, beispielsweise aus Polyamid

Um die Abdeckung vor einer Beschädigung beim Vernieten zu schützen, kann die Abdeckung auf ihrer von dem Gehäuseteil abgewandten Seite eine Ringscheibe aus Metall tragen, die Öffnungen für die Befestigungsteile wie Niete aufweist. Alternativ können die Befestigungsteile auch von einzelnen Unterlegscheiben umgeben sein.

Je nach Gehäuseteilausführung kann die Ringwand alternativ beispielsweise auch durch Verschrauben, Verclipsen, oder Verbiegen der Vorsprünge am Gehäuseteil befestigt werden.

Die Ringwand kann aber auch einstückig mit einer solchen Abdeckung ausgebildet sein. Beispielsweise kann die Ringwand eine Kuppel bilden. Wenn die Abdeckung einstückig mit der Ringwand ausgebildet ist oder keine Abdeckung vorhanden ist, also das Gehäuse ein offenes Gehäuse ist, kann die Ringwand auf ihrer von dem Gehäuseteil abgewandten Seite eine Ringscheibe aus Metall tragen, die Öffnungen für Niete aufweist. Die Ringscheibe schützt dann die Ringwand vor Beschädigung beim Vernieten.

Bevorzugt sind die Niete zur Befestigung der Ringwand zumindest teilweise rotationssymmetrisch, insbesondere kreisförmig mit gleichem Abstand zu ihren jeweiligen Nachbarn angeordnet. Diese Ausführung bietet eine große Variabilität für die Anordnung von Ringwand und Abdeckung So ist es dadurch möglich, sowohl die Ringwand, wich-tiger aber noch die Abdeckung gerastert im Nietabstandsmaß variabel in jeder Orientierung innerhalb der vollen 360° anordnen zu können. Dadurch kann beispielsweise ein abgewinkeltes Steckergehäuse je nach Kundenwusch ausgerichtet werden ohne konstruktive Änderung.

Zum elektrischen Verbinden des PTC-Heizers mit den Steckverbinderanschlüssen sind bevorzugt frei verdrahtete Leitungen vom PTC-Heizer zu den Anschlüssen vorgesehen. Dadurch kann vorteilhaft der Steckverbinderanschluss je nach Kundenwunsch ausgeführt werden, ohne dass bauliche Veränderungen am PTC-Heizer vorgenommen werden müssen.

Eine weitere Flexibilität ergibt sich, wenn in einer vorteilhaften Weiterentwicklung die Abdeckung und das Steckverbindergehäuse zweiteilig ausgeführt sind und über Einpressen, Verschweißen oder Einrasten miteinander verbunden sind. Dabei kann zwischen der Abdeckung und dem Steckverbindergehäuse ein Dichtelement angeordnet sein.

Zwischen der Ringwand und dem metallischen Gehäuseteil kann ein Dichtring angeordnet sein. Vorteilhaft kann so ein Eindringen von Flüssigkeit in den Innenraum der Behälterheizung verhindert werden. Ein Dichtring kann auch zwischen der Ringwand und der Abdeckung angeordnet sein. Bevorzugt sind beide Dichtungen gleich ausgeführt.

Das Gehäuseteil sowie ein eventuell an ihm befestigtes metallisches Wärmeabgabeelement sind bevorzugt aus einer Legierung auf Basis von Aluminium und können mit einer Kunststoffschicht vor Kontakt mit einer zu beheizenden Flüssigkeit geschützt sein, beispielsweise durch eine Pulverbeschichtung oder eine durch Elektrophorese erzeugte Beschichtung. Falls an dem Gehäuseteil ein metallisches Wärmeabgabeelement befestigt ist, überzieht die Kunststoffschicht sowohl das Gehäuseteil als auch das Wärmeabgabeelement.

Alternativ oder zusätzlich können das Gehäuseteil sowie ein eventuell an ihm angebrachtes Wärmeabgabeelement aus Aluminium oder einer Aluminiumbasislegierung auch mit einer Eloxalschicht überzogen sein. Eine Eloxalschicht kann vorteilhaft auch dazu genutzt werden, um das Gehäuseteil elektrisch von dem PTC-Heizer zu isolieren. Falls das Gehäuseteil (auch) mit einer Kunststoffschicht überzogen ist, weist diese bevorzugt eine Aussparung auf, in der der PTC-Heizer sitzt, damit die Wärmeankopplung des PTC-Heizers an das metallische Gehäuseteil möglichst wenig beeinträchtigt ist.

Weiterhin kann das Gehäuseteil und gegebenenfalls das Wärmeabgabeelement teilweise oder vollständig mit einer Lackschicht überzogen sein.

Im Gegensatz zu bekannten kunststoffumspritzten Heizvorrichtungen, für die für jede Variante eine eigenes Spritzgusswerkzeug hergestellt werden muss, lassen sich so sowohl in der einteiligen als auch in der mehrteiligen Ausführung sehr variabel Heizvorrichtungen ohne großen Änderungsaufwand nach Kundenwunsch realisieren durch
o freie Wahl der Geometrie des Gehäuseteiles
o freie Wahl der Positionierung des Heizers auf dem Gehäuseteil
o freie Wahl beim Positionieren eines Gehäuseteiles auf einem weiteren Wärmeübertragungselement
o freie Wahl der Orientierung der Abdeckung (360° gerastert)
o freie Wahl des Steckers in Gestalt und Position durch flexible Anschlussleitungen
o freie Wahl der Beschichtung des Gehäuseteiles und damit verbundenem Wärmeübertragungselement

Eine erfindungsgemäße Behälterheizung kann ein Gehäuse haben, das den PTC-Heizer in einem Innenraum einschließt. Wenn die Behälterheizung in eine Öffnung einer Tankwand eingesetzt wird, genügen die Ringwand und das metallische Gehäuseteil, um den PTC-Heizer vor dem Tankinhalt zu schützen. Ein geschlossenes Gehäuse, das den PTC-Heizer allseitig umgibt ist dann nicht zwingend erforderlich. Mit anderen Worten kann also der PTC-Heizer auf seiner von dem metallischen Gehäuseteil abgewandten Seite frei zugänglich, das Gehäuse also auf dieser Seite offen sein.

Um die Wärmeabgabe vom Gehäuseteil an eine Flüssigkeit noch zu verbessern, kann es vorteilhaft sein, dass das Gehäuseteil mit einem Kapillargewebe in Kontakt ist. Die Anordnung eines Kapillargewebes z.B. als Matte, Vlies oder Schwamm hat den Vorteil, dass durch die darin gebundene Flüssigkeit unabhängig vom Auftaugrad immer eine gewisse Menge an Flüssigkeit Wärmekontakt mit dem Gehäuseteil und damit mit dem PTC-Heizer hat, und die aufgenommene Wärme bei Schwappbewegungen an die übrige Flüssigkeit weitergegeben werden kann. Besonders bevorzugt hat das Kapillargewebe gleichzeitig eine Filterfunktion. So kann die Flüssigkeit z. B. durch das Filtermaterial gefiltert werden, bevor sie durch einen Auslass des Tanks abgesaugt wird.

Das Kapillargewebe kann dabei durch weitere Befestigungsvorrichtungen wie Niete am Gehäuseteil angebracht werden. Ebenso können weitere Komponenten durch Befestigungsvorrichtungen am Gehäuseteil angebracht werden. Dabei können die Komponenten beispielweise weitere gleich- oder auch andersartige Heizelemente, Fluid- oder elektrische Leitungen oder Kanäle oder Sensoren sein.

Weitere Einzelheiten und Vorteile der Erfindung werden an Ausführungsbeispielen unter Bezugnahme auf die beigefügten Zeichnungen erläutert. Gleiche und einander entsprechende Komponenten sind darin mit übereinstimmenden Bezugszahlen bezeichnet. Es zeigen:
Fig. 1 eine schematische Darstellung einer Behälterheizung;
Fig. 2 eine Schnittansicht eines Tanks mit der Behälterheizung;
Fig. 3 eine Schnittansicht der Behälterheizung;
Fig. 4 ein Ausführungsbeispiel des metallischen Gehäuseteils;
Fig. 5 ein weiteres Ausführungsbeispiel des metallischen Gehäuseteils;
Fig. 6 das metallische Gehäuseteil mit PTC-Heizer und Federelement; und
Fig. 7 das metallische Gehäuseteil mit PTC-Heizer.

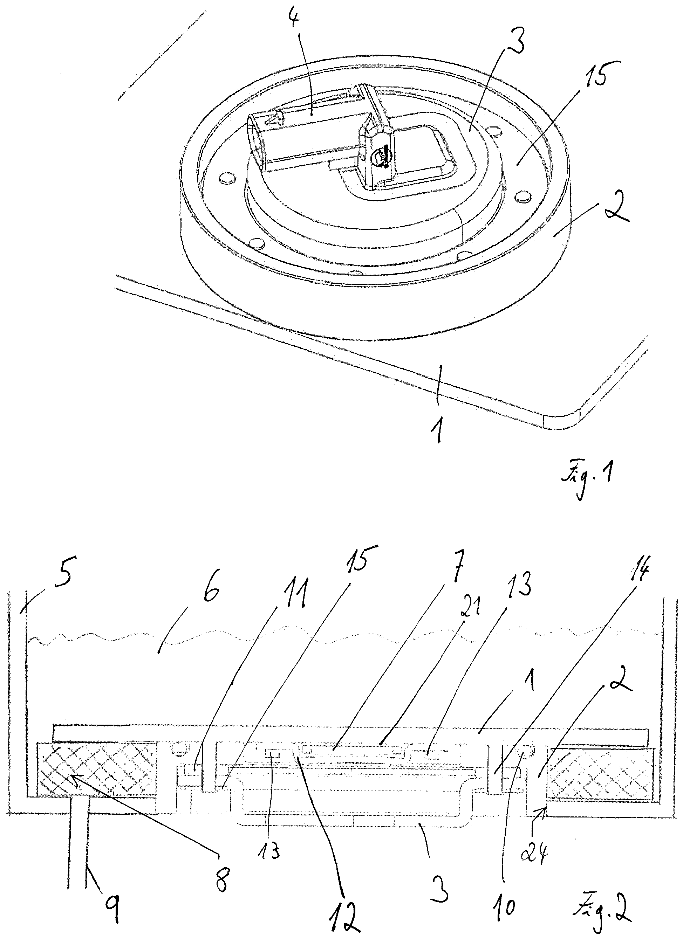

In Fig. 1 ist schematisch eine Behälterheizung, genauer gesagt eine Tankheizung dargestellt. Die Behälterheizung hat ein metallisches Gehäuseteil 1 in Form einer Trägerplatte, an der eine Ringwand 2 aus Kunststoff befestigt ist. An der Ringwand 2 ist eine Abdeckung 3 befestigt, die ein Gehäuse 4 eines elektrischen Steckverbinders zum Anschließen der Behälterheizung an eine Stromquelle trägt. Das Steckverbindergehäuse 4 kann einstückig mit der Abdeckung 3 ausgebildet sein.

Figur 2 zeigt eine Schnittansicht der in Figur 1 dargestellten Behälterheizung zusammen mit einem Flüssigkeitstank 5, in den sie eingebaut ist. In dem Tank ist schematisch ein Flüssigkeitspegel 6 eingezeichnet. Ein Vergleich der Figuren 1 und 2 zeigt dabei, dass die Behälterheizung in Figur 1 mit Blick von unten dargestellt ist.

Prinzipiell ist die Anordnung der Behälterheizung an allen Stellen der Behälterwand und in allen Einbaulagen denkbar.

Das metallische Gehäuseteil 1, die Ringwand 2 und die Abdeckung 3 umschließen gemeinsam einen abgedichteten Innenraum 30, in dem ein PTC-Heizer 7 angeordnet ist. Die Behälterheizung ist in eine Öffnung des Flüssigkeitstanks 5 eingesetzt und verschließt diese. Dazu kann die Ringwand 2 mit der Wand des Tanks 5 verschweißt sein. Eine entsprechende Schweißnaht 24 ist in Figur 2 angedeutet. Da Wände von Flüssigkeitstanks, insbesondere von Wassertanks, oft aus Kunststoff sind, ist es günstig, wenn die Ringwand 2 ebenfalls aus Kunststoff ist, beispielsweise aus Polyethylen oder einem mit Polyethylen verschweißbaren Kunststoff. Derartige Kunststoffe können vorteilhaft für Wassertanks in Kraftfahrzeugen verwendet werden kann.

Die von dem PTC-Heizer 7 erzeugte Wärme wird über das Gehäuseteil 1 an die Flüssigkeit 6 in dem Tank 5 abgegeben. Um die Wärmeabgabefläche zu vergrößern, kann es vorteilhaft sein, wenn sich das als Trägerplatte ausgebildete Gehäuseteil 1 seitlich über die Ringwand 2 hinaus erstreckt. Zwischen einer Wand des Tanks 5 und einem über die Ringwand 2 hinausragenden Abschnitt des Gehäuseteils 1 kann Kapillargewebe 8 oder Filtermaterial angeordnet sein. Die Anordnung eines Kapillargewebes z.B. als Matte, Vlies oder Schwamm hat den Vorteil, dass durch die darin gebundene Flüssigkeit unabhängig vom Auftaugrad immer eine gewisse Menge an Fluid Wärmekontakt mit dem Gehäuseteil 1 und damit mit dem PTC-Heizer 7 hat, und die aufgenommene Wärme bei Schwappbewegungen an die übrige Flüssigkeit weitergegeben werden kann. Besonders bevorzugt hat das Kapillargewebe 8 gleichzeitig eine Filterfunktion. So kann die Flüssigkeit 6 z. B. durch das Kapillargewebe 8 gefiltert werden, bevor sie aus einem Auslass 9 des Tanks ausströmt.

Zur Verbesserung der Abdichtung zwischen dem metallischen Gehäuseteil 1 und der Ringwand 2 kann zwischen dem metallischen Gehäuseteil 1 und der Ringwand 2 ein Dichtring 10 angeordnet sein, beispielsweise ein O-Ring. Zur Aufnahme des Dichtrings 10 kann in der Ringwand 2 und/oder dem metallischen Gehäuseteil 1 eine passende Ringnut vorgesehen sein, in welcher der Dichtring 10 sitzt. Bei dem gezeigten Ausführungsbeispiel ist zudem zwischen der Abdeckung 3 und der Ringwand 2 ein Dichtring 11 angeordnet, beispielsweise eine Flachdichtung. Durch sie ist der Innenraum 30 und somit der PTC-Heizer 7 nach außen abgedichtet. Alternativ kann der Innenraum auch teilweise oder vollständig vergossen werden.

Der PTC-Heizer 7 enthält wenigstens einen PTC-Heizwiderstand 19 und ein Kontaktelement, beispielsweise ein Kontaktblech 21. Der PTC-Heizer 7 wird von einem metallischen Federelement 12 gegen eine Wärmeübertragungsfläche des Gehäuseteils 1 gedrückt, nämlich gegen die Innenseite des Gehäuseteils 1. Das metallische Federelement 12 kann beispielsweise aus Blech oder als Strangpressteil kostengünstig hergestellt werden. Wie Figur 2 zeigt, hat das Federelement 12 eine zur Mitte des PTC-Heizers 7 hin gebogene Andruckfläche, die gegen den PTC-Heizer 7 drückt. Das Federelement 12 kann mit dem metallischen Gehäuseteil 1 verrastet oder verstemmt sein. Bei dem dargestellten Ausführungsbeispiel ist das Federelement 12 mittels Nieten mit dem Gehäuseteil 1 verstemmt. Das Gehäuseteil 1 weist dazu stiftartige Vorsprünge auf, die als Niete 13 durch passende Öffnungen des Federelements 12 hindurchgreifen.

Das metallische Gehäuseteil 1 kann zusätzlich weitere als Nieten 14 ausgebildete Vorsprünge aufweisen mit denen die Ringwand 2 an dem Gehäuseteil 1 befestigt ist. Die einstückig mit dem Gehäuseteil 1 ausgebildeten Nieten 14 greifen durch entsprechende axial verlaufende Öffnungen der Ringwand 2 und der Abdeckung 3 hindurch. Damit die aus Kunststoff, beispielsweise Polyamid, gebildete Abdeckung 3 beim Verstemmen der Nieten 14 nicht beschädigt wird, kann eine metallische Ringscheibe 15, bevorzugt ein Edelstahlblech, vorgesehen sein, die außen auf der Abdeckung 3 liegt und Öffnungen aufweist, durch welche die Niete 14 hindurchgreifen. Beim Verstemmen der Niete 14 kann die metallische Ringscheibe 15 die dabei auftretenden Kräfte aufnehmen und flächig verteilen, so dass die Abdeckung 3 nicht beschädigt wird.

Wie Figur 2 zeigt, können die als Niete 14 ausgebildete Vorsprünge des metallischen Gehäuseteil 1 durch einen radial einwärts verlaufenden Flanschabschnitt der Ringwand 2 hindurch verlaufen, der die Abdeckung 3 trägt.

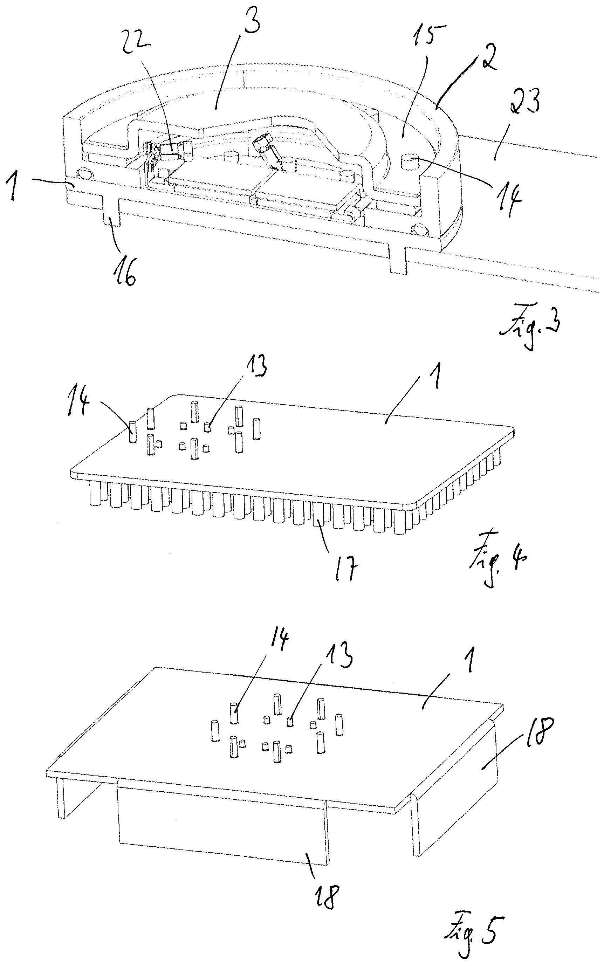

Wie vor allem aus den Fig. 5 - 7 ersichtlich sind die Niete 14 kreisförmig mit gleichem benachbarten Abstand angeordnet. Diese Ausführung bietet eine große Variabilität für die Anordnung von Ringwand 2 und Abdeckung 3. So ist es dadurch möglich, die Abdeckung 3 und damit das abgewinkelte Steckverbindergehäuse 4 gerastert im Nietabstandsmaß variabel in jeder Orientierung innerhalb der vollen 360° anordnen zu können.

Figur 3 zeigt eine abgewandelte Ausführungsform der vorstehend beschriebenen Behälterheizung. Der wesentliche Unterschied zu dem vorstehend beschriebenen Ausführungsbeispiel besteht darin, dass das metallische Gehäuseteil 1 kleiner ausgebildet ist und sich nicht wesentlich radial auswärts von der Ringwand 2 erstreckt. Zur Vergrößerung der Wärmeübertragungsfläche ist deshalb an dem metallischen Gehäuseteil 1 ein Wärmeübertragungselement 23 befestigt. Das Wärmeübertragungselement 23 kann mit dem metallischen Gehäuseteil 1 vernietet sein. Das metallische Gehäuseteil 1 kann dazu einstückig mit Nieten 16 ausgebildet sein, die durch passende Öffnungen des Wärmeübertragungselements 23 hindurchragen. Vorteil dieser mehrteiligen Ausführung ist auch hier die große Variabilität. So kann mit einem einzigen vorgefertigten Heizeinsatz fast jede gewünschte Wärmeübertragungskontur realisiert werden. Einzig das Wärmeübertragungselement 23 muss jeweils angepasst werden.

Ein metallisches Gehäuseteil 1 mit Nieten 13, 14, 16 kann kostengünstig als Fließpressteil hergestellt werden, beispielsweise in Form einer Trägerplatte. Stiftartige Vorsprünge zur Ausbildung von Nieten 13, 14, 16 lassen sich auf diese Weise kostengünstig einstückig mit dem metallischen Gehäuseteil 1 herstellen. Besonders vorteilhaft ist dabei, dass die Form des metallischen Gehäuseteils 1, insbesondere dessen Unterseite oder Außenkontur mit geringem Aufwand an gegebene Anforderungen etwa die geometrischen Verhältnisse eines Flüssigkeitstanks angepasst werden können.

Figur 4 zeigt dazu ein Ausführungsbeispiel des metallischen Gehäuseteils 1, das Nieten 13 zur Befestigung des Federelements 12, Nieten 14 zur Befestigung der Ringwand 2 und auf seiner Außenseite Vorsprünge 17 zur Oberflächenvergrößerung und Verbesserung der Wärmeabgabe aufweist.

Figur 5 zeigt beispielhaft ein anderes Ausführungsbeispiel des metallischen Gehäuseteils 1, das sich von dem in Figur 4 gezeigten Ausführungsbeispiel im Wesentlichen nur dadurch unterscheidet, dass es statt der stiftartigen Vorsprünge 17 von der Grundfläche abgebogene Seitenwände 18 aufweist. Im eingebauten Zustand können diese Seitenwände 18 als Wärmeleitrippen nach oben in den Behälter ragen.

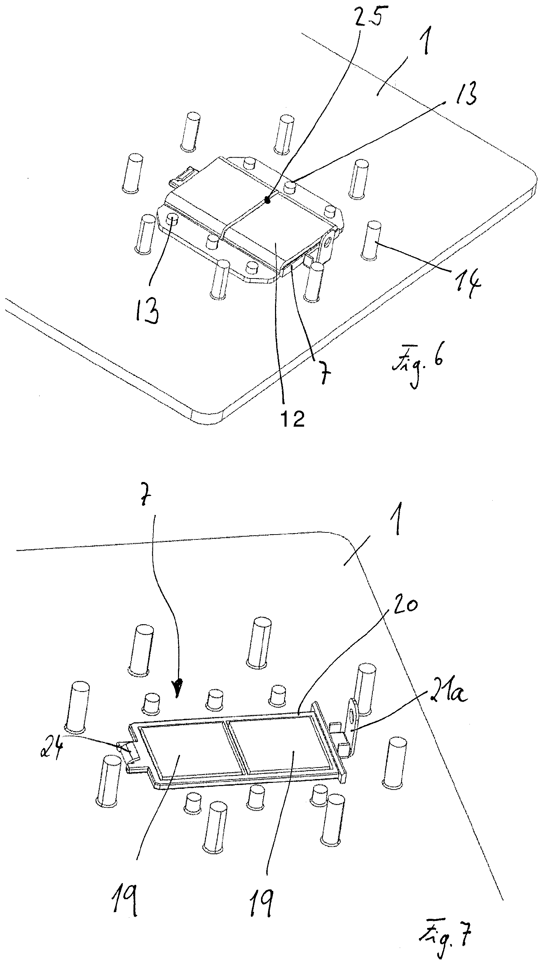

Figur 6 zeigt das metallische Gehäuseteil 1 mit dem PTC-Heizer 7 und dem Federelement 12. Das Federelement 12 ist mit Nieten 13, die einstückig mit dem Gehäuseteil 1 ausgebildet sind, an dem Gehäuseteil 1 befestigt. Figur 7 zeigt eine Ansicht zu Figur 6 ohne das Federelement 12. In Figur 7 ist zu sehen, dass der PTC-Heizer 7 mehrere, beispielsweise zwei PTC-Heizwiderstände 19 enthält.

Damit auch bei eventuellen Fertigungstoleranzen hinsichtlich der Dicke der PTC-Heizwiderstände 19 beide PTC-Heizwiderstände 19 mit einer hohen Kraft zu dem Gehäuseteil 1 hingedrückt werden können, kann das Federelement 12 einen Schlitz 25 zwischen benachbarten PTC-Heizwiderständen 19 aufweisen. Auf diese Weise können die Abschnitte des Federelements 12 auf beiden Seiten des Schlitzes 25 im Wesentlichen unabhängig voneinander eine Federkraft auf die PTC-Heizwiderstände 19 ausüben und diese gegen das Gehäuseteil 1 drücken.

Die PTC-Heizwiderstände 19 können von einem Montagerahmen 20 gehalten werden, der auch ein Kontaktelement 21 (siehe Fig. 2), beispielsweise ein Kontaktblech hält, das zur elektrischen Kontaktierung der PTC-Heizwiderstände 19 flächig an diesen anliegt. Das Gehäuseteil 1 kann einen oder mehrere Anschläge (nicht gezeigt) bilden, die den PTC-Heizer 7 bzw. den Montagerahmen 20 positionieren und gegen Verschiebungen sichern. Weiterhin weist bei dem gezeigten Ausführungsbeispiel das Kontaktblech 21 einen Vorsprung 24 auf, der zu einem Haken gebogen ist, in den der Montagerahmen 20 zur Fixierung eingehakt ist.

Bei dem gezeigten Ausführungsbeispiel liegt das Kontaktelement 21 zwischen dem Gehäuseteil 1 und den PTC-Heizwiderständen 19. Das Kontaktelement 21 kann dabei einen Fortsatz 21a aufweisen, an dem über einen Ringkabelschuh 22 (siehe Fig. 3) oder ein sonstiges Anschlusselement eine Leitung (nicht ge-zeigt) mit einem entsprechenden Kontaktstift des Steckverbinders 4 verbunden werden kann. Über einen weiteren Ringkabelschuh 29, der mit einer Niet 13 des Federelementes 12 gefasst ist, ist eine zweite Leitung mit einem Kontaktstift des Steckverbinders 4 verbunden. Bei dem Ausführungsbeispiel der Figuren 6 und 7 werden die PTC-Heizwiderstände 19 auf ihrer von dem Kontaktelement 21 abgewandten Seite von dem Federelement 12 elektrisch kontaktiert. Das Gehäuseteil 1 ist dazu durch eine Isolationsschicht elektrisch von dem Kontaktelement 21 isoliert. Eine geeignete Isolationsschicht kann bei einem aus Aluminium oder einer Aluminiumbasislegierung hergestellten Gehäuseteil 1 beispielsweise durch eine Eloxalschicht kostengünstig realisiert werden. Diese Variante ist insbesondere dann besonders vorteilhaft, wenn das gesamte Gehäuseteil 1 mit einer Eloxalbeschichtung als Korrosionsschutz versehen ist.

Alternativ ist es aber auch möglich, das Gehäuseteil 1 als Massekontakt der PTC-Heizwiderstände 19 zu verwenden und ein Kontaktelement 21 auf der von dem Gehäuseteil 1 abgewandten Seite der PTC-Heizwiderstände 19 anzuordnen und dieses Kontaktelement dann elektrisch von dem Federelement 12 bzw. dem Gehäuseteil 1 zu isolieren, beispielsweise durch Zwischenlage eines Blatts aus elektrisch isolierendem Kunststoff oder Keramik zwischen Kontaktblech 21 und Federelement 12.

Das Gehäuseteil 1 und ein eventuell an ihm befestigtes Wärmeabgabeelement 23 können kostengünstig aus einer Aluminiumbasislegierung hergestellt und durch eine Eloxalschicht vor einer zur erwärmenden Flüssigkeit 6 geschützt wer-den. Eine solche Eloxalschicht kann das Gehäuseteil sowohl auf seiner Innen-seite als auch auf seiner Außenseite bedecken. Alternativ oder zusätzlich können das metallische Gehäuseteil 1 und ein eventuell an ihm befestigtes Wärmeübertragungselement 23 auch mit einer Kunststoffschicht überzogen werden. Eine entsprechende Kunststoffschicht kann beispielsweise als Pulverbeschichtung aufgetragen werden, bevorzugt ist aber eine durch Elektrophorese erzeugte Beschichtung. Für eine Kunststoffbeschichtung sind beispielsweise Polyethylen, Polypropylen, fluorierte Thermoplaste sowie Polyamide, insbesondere partiell aromatische Polyamide wie Polyphthalamid geeignet.

Falls das Gehäuseteil 1 eine Kunststoffschicht trägt, kann es vorteilhaft sein, den PTC-Heizer 7 in einer Aussparung der Kunststoffschicht anzuordnen, so dass der Wärmekontakt zwischen PTC-Heizer 7 und Gehäuseteil 1 durch die Kunststoffschicht nicht beeinträchtigt wird.

### Bezugszeichenliste

- 1: Gehäuseteil
- 2: Ringwand
- 3: Abdeckung
- 4: Steckverbindergehäuse
- 5: Tank
- 6: Flüssigkeit
- 7: PTC-Heizer
- 8: Kapillargewebe
- 9: Auslass
- 10: Dichtring
- 11: Dichtring
- 12: Federelement
- 13: Niet
- 14: Niet
- 15: Ringscheibe
- 16: Niet
- 17: Vorsprung
- 18: Lasche
- 19: PTC-Heizwiderstand
- 20: Montagerahmen
- 21: Kontaktelement
- 21a: Fortsatz
- 22: Kabelschuh
- 23: Wärmeübertragungselement
- 24: Vorsprung
- 25: Schlitz
- 29: Ringkabelschuh
- 30: Innenraum

## Patentansprüche

1. Heizvorrichtung, insbesondere Behälterheizung, mit
einem PTC-Heizer (7), der einen PTC-Heizwiderstand (19) und ein Kontaktelement (21) enthält,
einem Gehäuseteil (1) aus Metall, und
einem Federelement (12), das eine Federkraft erzeugt, die den PTC-Heizer (7) gegen eine Wärmeübertragungsfläche des Gehäuseteils (1) drückt,
**dadurch gekennzeichnet, dass** das Federelement (12) aus Metall ist und mittels Nieten (13) mit dem Gehäuseteil (1) verstemmt ist.

2. Heizvorrichtung nach Anspruch 1, **dadurch gekennzeichnet, dass** die Nieten (13) einstückig mit dem Gehäuseteil (1) ausgebildet sind.

3. Heizvorrichtung nach einem der vorstehenden Ansprüche, **dadurch gekennzeichnet, dass** das Federelement (13) aus einer Aluminiumbasislegierung ist, insbesondere einer federharten Aluminiumbasislegierung.

4. Heizvorrichtung nach einem der vorstehenden Ansprüche, **dadurch gekennzeichnet, dass** der PTC-Heizer (7) mehrere PTC-Heizwiderstände (19) enthält und das Federelement (13) einen Schlitz (25) zwischen benachbarten Heizwiderständen (19) aufweist.

5. Heizvorrichtung nach einem der vorstehenden Ansprüche, **dadurch gekennzeichnet, dass** das Gehäuseteil (1) eine Ringwand (2) trägt, die den PTC-Heizer (7) umgibt.

6. Heizvorrichtung nach Anspruch 5, **dadurch gekennzeichnet, dass** ein Dichtring (10) zwischen dem Gehäuseteil (1) und der Ringwand (2) angeordnet ist.

7. Heizvorrichtung nach Anspruch 5 oder 6, **dadurch gekennzeichnet, dass** die Ringwand (2) eine Abdeckung (3) trägt.

8. Heizvorrichtung nach einem der Ansprüche 5 bis 7, **dadurch gekennzeichnet, dass** die Ringwand (2) mit dem Gehäuseteil (1) vernietet ist.

9. Heizvorrichtung nach Anspruch 7 und 8, **dadurch gekennzeichnet, dass** die Niete (14), welche das Gehäuseteil (1) mit der Ringwand (2) verbinden, zugleich auch die Abdeckung (3) an der Ringwand (2) halten.

10. Heizvorrichtung nach Anspruch 9, **dadurch gekennzeichnet, dass** die Abdeckung (3) aus Kunststoff ist und eine Ringscheibe (15) aus Metall trägt, durch welche die Niete (14), welche das Gehäuseteil (1) mit der Ringwand (2) und der Abdeckung (3) verbinden, hindurchragen.

11. Heizvorrichtung nach einem der Ansprüche 5 bis 10, **dadurch gekennzeichnet, dass** die Ringwand (3) aus Kunststoff ist, vorzugsweise aus Polyethylen oder einem mit Polyethylen verschweißbaren Kunststoff.

12. Heizvorrichtung nach einem der vorstehenden Ansprüche, **dadurch gekennzeichnet, dass** das Gehäuseteil (1) durch Fließpressen hergestellt ist.

13. Heizvorrichtung nach einem der vorstehenden Ansprüche, **dadurch gekennzeichnet, dass** an Gehäuseteil (1) ein Wärmeübertragungselement (23) befestigt ist, vorzugsweise durch Verstemmen.

14. Heizvorrichtung nach einem der vorstehenden Ansprüche, **dadurch gekennzeichnet, dass** das Gehäuseteil (1) mit einer elektrisch isolierenden Schicht, vorzugsweise einer Eloxalschicht, überzogen ist, die das Gehäuseteil (1) elektrisch von dem PTC-Heizer (1) isoliert.

## Claims

1. Heating device, in particular container heater, having
a PTC heater (7) containing a PTC heating resistor (19) and a contact element (21),
a housing part (1) made of metal, and
a spring element (12), which generates a spring force which presses the PTC heater (7) against a heat transfer surface of the housing part (1),
**characterized in that** the spring element (12) is made of metal and is staked with the housing part (1) by means of rivets (13).

2. Heating device according to claim 1, **characterized in that** the rivets (13) are formed integrally with the housing part (1).

3. Heating device according to any one of the preceding claims, **characterized in that** the spring element (13) is made of an aluminium-base alloy, in particular a spring-tempered aluminium-base alloy.

4. Heating device according to any one of the preceding claims, **characterized in that** the PTC heater (7) contains multiple PTC heating resistors (19) and the spring element (13) has a slot (25) between adjacent heating resistors (19).

5. Heating device according to any one of the preceding claims, **characterized in that** the housing part (1) supports an annular wall (2) which surrounds the PTC heater (7).

6. Heating device according to claim 5, **characterized in that** a sealing ring (10) is arranged between the housing part (1) and the annular wall (2).

7. Heating device according to claim 5 or 6, **characterized in that** the annular wall (2) supports a cover (3).

8. Heating device according to any one of claims 5 to 7, **characterized in that** the annular wall (2) is riveted to the housing part (1).

9. Heating device according to claim 7 and 8, **characterized in that** the rivets (14), which connect the housing part (1) to the annular wall (2), at the same time also hold the cover (3) onto the annular wall (2).

10. Heating device according to claim 9, **characterized in that** the cover (3) is made of plastic and supports a washer (15) made of metal, through which protrude the rivets (14) which connect the housing part (1) to the annular wall (2) and the cover (3).

11. Heating device according to any one of claims 5 to 10, **characterized in that** the annular wall (3) is made of plastic, preferably of polyethylene or a plastic which can be welded to polyethylene.

12. Heating device according to any one of the preceding claims, **characterized in that** the housing part (1) is produced by impact extrusion.

13. Heating device according to any one of the preceding claims, **characterized in that** a heat transfer element (23) is attached to the housing part (1), preferably by staking.

14. Heating device according to any one of the preceding claims, **characterized in that** the housing part (1) is coated with an electrically insulating layer, preferably an anodised layer, which electrically insulates the housing part (1) from the PTC heater (1).

## Revendications

1. Dispositif de chauffage, en particulier de chauffage de récipient, comportant
un chauffage PTC (7), qui présente une résistance chauffante PTC (19) et un élément de contact (21),
une partie de boîtier (1) en métal, et
un élément de ressort (12) qui génère une force de ressort qui presse le chauffage PTC (7) contre une surface de transfert de chaleur de la partie de boîtier (1),
**caractérisé en ce que** l'élément de ressort (12) est en métal et est fixé par matage sur la partie de boîtier (1) au moyen de rivets (13).

2. Dispositif de chauffage selon la revendication 1 **caractérisé en ce que** les rivets (13) sont formés en un seul tenant avec la partie de boîtier (1).

3. Dispositif de chauffage selon une des revendications précédentes, **caractérisé en ce que** l'élément de ressort (13) est réalisé en un alliage à base d'aluminium, notamment un alliage à base d'aluminium dur élastique.

4. Dispositif de chauffage selon une des revendications précédentes, **caractérisé en ce que** l'élément chauffant PTC (7) contient plusieurs résistances chauffantes PTC (19) et l'élément de ressort (13) présente une fente (25) entre des résistances chauffantes adjacentes (19).

5. Dispositif de chauffage selon une des revendications précédentes, **caractérisé en ce que** la partie boîtier (1) porte une paroi annulaire (2) qui entoure l'élément chauffant PTC (7).

6. Dispositif de chauffage selon la revendication 5, **caractérisé en ce qu'**une bague d'étanchéité (10) est disposée entre la partie de boîtier (1) et la paroi annulaire (2).

7. Dispositif de chauffage selon la revendication 5 ou 6, **caractérisé en ce que** la paroi annulaire (2) porte un couvercle (3).

8. Dispositif de chauffage selon une des revendications 5 à 7, **caractérisé en ce que** la paroi annulaire (2) est rivetée sur la pièce de boîtier (1).

9. Dispositif de chauffage selon les revendications 7 et 8, **caractérisé en ce que** les rivets (14) qui relient la pièce de boîtier (1) à la paroi annulaire (2) maintiennent simultanément également le couvercle (3) sur la paroi annulaire (2).

10. Dispositif de chauffage selon la revendication 9, **caractérisé en ce que** le couvercle (3) est en matière plastique et porte un disque annulaire (15) en métal, à travers lequel les rivets (14), qui relient la partie de boîtier (1) à la paroi annulaire (2) et au couvercle (3), dépassent en saillie.

11. Dispositif de chauffage selon une des revendications 5 à 10, **caractérisé en ce que** la paroi annulaire (3) est en matière plastique, de préférence en polyéthylène ou en une matière plastique soudable au polyéthylène.

12. Dispositif de chauffage selon une des revendications précédentes, **caractérisé en ce que** la pièce de boîtier (1) est réalisée par extrusion.

13. Dispositif de chauffage selon une des revendications précédentes, **caractérisé en ce qu'**un élément caloporteur (23) est fixé sur la pièce de boîtier (1), de préférence par matage.

14. Dispositif de chauffage selon une des revendications précédentes, **caractérisé en ce que** la partie de boîtier (1) est revêtue d'une couche électriquement isolante, de préférence une couche anodisée, qui isole électriquement la partie de boîtier (1) de l'élément chauffant PTC (1).
